# EUROPEAN PATENT SPECIFICATION

(11) **EP 0 447 093 B1**
(45) Date of publication and mention of the grant of the patent: **24.01.1996**
(21) Application number: 91301786.9
(22) Date of filing: 04.03.1991
(51) Int. Cl.: C08G 18/79

(54) **Polyisocyanate composition**
Polyisocyanatzusammensetzung
Composition de polyisocyanate

(30) Priority: 07.03.1990 US 490169; 07.01.1991 GB 9100278
(43) Date of publication of application: 18.09.1991
(73) Proprietor: IMPERIAL CHEMICAL INDUSTRIES PLC, London SW1P 3JF (GB)
(72) Inventor: Donaldson, Ronald Ruhl, Baton Rouge, Louisiana 70809 (US); Dueber, Ernst Otto, B-3080 Tervuren (BE); Murray, William Ian, Somerton, Somerset TA11 7HA (GB)
(74) Representative: Swinnen, Anne-Marie

(56) References cited:
- EP-A- 0 081 710
- EP-A- 0 118 725

## Description

The present invention relates to isocyanate compositions and especially to isocyanate compositions containing isocyanurate groups.

It is already known in the art to use isocyanate compositions containing from 20 to 50% by weight of isocyanurate radicals in the preparation of isocyanurate foams.

Thus EP 81 710 discloses isocyanurate compositions containing 45%-70% by weight of diisocyanates having an isocyanurate content of 20 to 33% by weight. EP 118 725 discloses polyisocyanate compositions containing 2.6 - 10% isocyanurate groups. Either the functionalities or the viscosity of these compositions is not in the range envisaged by the present invention.

It is now the object of the present invention to provide stable polyisocyanate compositions containing from 3% to 20% by weight of trimerized isocyanates, from 30% to 55% by weight of diisocyanates, the remainder being higher functionality polyisocyanates, said composition having a Brookfield viscosity of 150 to 3000 cPs at 25°C, an average isocyanate functionality of 2.4 to 2.9, preferably of 2.5 to 2.7, an NCO group content of 28% to 31% by weight, preferably 29% to 31% by weight, having an infrared absorption peak at 1410 cm ⁻¹, and whereas the ratio of the height of said absorption peak at 1410 cm⁻¹ to the height of the infrared absorption peak at 1610 cm⁻¹ is of at least 0.8, preferably in the range of 0.8 to 3.0.

The trimerized polyisocyanate compositions of the present invention are proposed as an advantageous alternative to the conventional so called "high functionality MDI" of high viscosity, which has a diisocyanate content of about 20 % to about 28 % by weight - and which is obtained after partial extraction of the diisocyanate isomers from the "MDI precursor" which is defined hereinafter -. It is indeed the disadvantage of the conventional high functionality MDI that it undergoes a darkening of its initial colour, this darkening resulting in a deterioration of its quality.

The polyisocyanate compositions of the present invention are obtained by trimerizing the so-called "MDI precursor" or by trimerizing the so-called "standard functionality MDI" (also commonly referred to as "polymeric MDI").

The term "MDI precursor" as used herein refers to the product which is obtained after phosgenation of diamine diphenyl methane containing higher polymethylene polyphenylene polyamine oligomers and after removal of the solvent used during said phosgenation.

The term "polymeric MDI" as used herein refers to polyphenyl polymethylene polyisocyanates composition having a diisocyanate content of about 40 % to about 45 % by weight which remains after extraction - by partial distillation or partial solvent extraction - of the diisocyanates isomers from the "MDI precursor".

The trimerization of the polyisocyanate materials is carried out in the presence of trimerization catalysts. Trimerization catalysts are well known in the art. Examples of suitable catalysts include organic strong bases, basic salts of carboxylic acids, alkali metal alcoholates and tertiary amines.

The trimerization process can be preformed according to a variety of procedures. (see for example US 3 723 363 or GB 837 120).

The polymerisation process may be performed at temperatures of from -10°C to the temperature at which the catalyst used decomposes, but it is usually preferable to carry out these reactions at or about ambient temperature. When desired, solvents which are inert to the isocyanate may be present and the addition of such solvents may be used to moderate the rate of reaction if so desired. Suitable solvents are esters such as ethyl acetate and butyl acetate, ketones such as acetone and methyl ethyl ketone, chloroform, benzene, toluene, xylene, monochlorobenzene, o-dichlorobenzene, ethers such as diethyl and dibutyl ether and petroleum ethers. The polymerisation is exothermic and the amount of catalyst used will vary with the nature of the isocyanate involved, the amount of solvent present and the rate at which polymerisation is to take place. In general the amount used is of 0.001 to 3 per cent by weight of the isocyanate used. The polymerisation may be inhibited at any stage by adding sufficient of an acidic substance, for example, hydrochloric acid, acetic acid, or acetyl chloride, to neutralise the basic catalyst present, either completely or in part.

The trimerized polyisocyanate compositions of the present invention can be used as an advantageous alternative to conventional high functionality MDI products in any application were such MDI has been proposed.

The invention is illustrated but not limited by the following examples.

### Example 1

Polyisocyanate composition A was obtained by trimerizing an MDI precursor blend having a diisocyanate content of 55% by weight and a viscosity of 90 cPs, until a viscosity of 784 cPs was reached. The trimerization catalyst - tetramethylguanidine - was used in an amount of 1500 ppm. The trimerization process was performed at room temperature; the reaction was stopped by the addition of 3000 ppm of methyl sulfonic acid.

The trimerized polyisocyanate composition A had the following properties :
- NCO content of 29.8%
- isocyanate functionality of 2.6
- diisocyanate content : in the range of 30% to 55% by weight
- amount of trimerized isocyanate : 10% by weight
- ratio of height of infra red absorption peak at 1410 cm⁻¹ to height of absorption peak at 1610 cm ⁻¹ : 1.6.

### Example 2

Polyisocyanate composition B was obtained by trimerizing an MDI precursor blend having a diisocyanate content of 55% by weight and a viscosity of 90 cPs, until a viscosity of 290 cPs was reached. The trimerization catalyst - tetramethylguanidine - was used in an amount of 1500 ppm. The trimerization process was performed at room temperature; the reaction was stopped by the addition of 3000 ppm of methyl sulfonic acid.

The trimerized polyisocyanate composition B had the following properties :
- NCO content of 30.5%
- isocyanate functionality of 2.5
- diisocyanate content : in the range of 30% to 55% by weight
- amount of trimerized isocyanate : 5% by weight
- ratio of height of infra red absorption peak at 1410 cm¹ to height of absorption peak at 1610 cm⁻¹ : 1.0.

### Example 3

Polyisocyanate composition D was obtained by trimerizing an MDI precursor blend having a diisocyanate content of 54 % by weight, an NCO-value of 31.4 % and a viscosity of 126 mPa.s, until a viscosity of 3550 mPa.s was reached. The trimerization catalyst - tetramethylguanidine - was used in an amount of 2400 ppm. The trimerization process was performed at room temperature; the reaction was stopped by the addition of 4800 ppm of methyl sulfonic acid.

The trimerized polyisocyanate composition B had the following properties :
- NCO content of 28.6 %
- isocyanate functionality of 2.6
- diisocyanate content : 44 % by weight
- amount of trimerized isocyanate : 18 % by weight
- ratio of height of infra red absorption peak at 1410 cm¹ to height of absorption peak at 1610 cm ⁻¹ : > 1.6.

## Claims

1. A stable polyisocyanate composition containing from 3% to 20% by weight of trimerized isocyanate, from 30% to 55% by weight of diisocyanates, the remainder being higher functionality polyisocyanates, said composition having a Brookfield viscosity of 150 to 3000 cPs at 25°C, an average isocyanate functionality of 2.4 to 2.9, an NCO group content of 28% to 31%, and having an infrared absorption peak at 1410 cm⁻¹, whereas the ratio of the height of said absorption peak at 1410 cm⁻¹ to the height of the infrared absorption peak at 1610 cm⁻¹ is of at least 0.8.

2. A stable polyisocyanate composition according to claim 1, having an average isocyanate functionality of 2.5 to 2.7.

3. A stable polyisocyanate composition according to claim 1, whereas the ratio of the height of the infrared absorption peak at 1410 cm⁻¹ to the height of the infrared absorption peak at 1610 cm⁻¹ is of not more than 3.0.

## Patentansprüche

1. Stabile Polyisocyanat-Zusammensetzung, die 3 bis 20 Gew.-% trimerisiertes Isocyanat, 30 bis 55 Gew.-% Diisocyanate enthält, wobei der Rest Polyisocyanate mit höherer Funktionalität sind, die Zusammensetzung eine Brookfield-Viskosität von 150 bis 3000 cPs bei 25°C, eine durchschnittliche Isocyanat-Funktionalität von 2,4 bis 2,9 einen Gehalt an NCO-Gruppen von 28 bis 31 % und einen Infrarot-Absorptionspeak bei 1410 cm⁻¹ hat und wobei das Verhältnis der Höhe des Absorptionspeaks bei 1410 cm⁻¹ zu der Höhe des Infrarot-Absorptionspeaks bei 1610 cm⁻¹ mindestens 0,8 ist.

2. Stabile Polyisocyanat-Zusammensetzung nach Anspruch 1 mit einer durchschnittlichen Isocyanat-Funktionalität von 2,5 bis 2,7.

3. Stabile Polyisocyanat-Zusammensetzung nach Anspruch 1, wobei das Verhältnis der Höhe des Absorptionspeaks bei 1410 cm⁻¹ zu der Höhe des Infrarot-Absorptionspeaks bei 1610 cm⁻¹ höchstens 3,0 ist.

## Revendications

1. Composition de polyisocyanate stable contenant 3 % à 20 % en poids d'un isocyanate trimérisé, 30 % à 55 % en poids de diisocyanates, le pourcentage restant consistant en polyisocyanates de fonctionnalité supérieure, ladite composition ayant une viscosité Broockfield de 150 à 3000 cPs à 25°C, une fonctionnalité isocyanate moyenne de 2,4 à 2,9, une teneur en groupes NCO de 28 à 31 %, et ayant un pic d'absorption infrarouge à 1410 cm⁻¹, dans laquelle le rapport dudit pic d'absorption à 1410 cm⁻¹ à la hauteur du pic d'absorption infrarouge à 1610 cm⁻¹ est d'au moins 0,8.

2. Composition de polyisocyanate stable suivant la revendication 1, ayant une fonctionnalité isocyanate moyenne de 2,5 à 2,7.

3. Composition de polyisocyanate stable suivant la revendication 1, dans laquelle le rapport de la hauteur du pic d'absorption infrarouge à 1410 cm⁻¹ à la hauteur du pic d'absorption infrarouge à 1610 cm⁻¹ est non supérieur à 3,0.
